# EUROPÄISCHE PATENTANMELDUNG

(11) **EP 4 616 968 A1**
(43) Veröffentlichungstag der Anmeldung: **17.09.2025**
(21) Anmeldenummer: 24163255.3
(22) Anmeldetag: 13.03.2024
(51) Int. Cl.: B08B 3/02

(54) **HANDGEFÜHRTES HOCHDRUCKREINIGUNGSGERÄT**

(71) Anmelder: Andreas Stihl AG & Co. KG, 71336 Waiblingen (DE)
(72) Erfinder: Renz, Michael, 70372 Stuttgart (DE); Häfele, Mario, 71543 Wüstenrot (DE)
(74) Vertreter: Karzel, Philipp

(57) **Zusammenfassung**

Die Erfindung betrifft ein handgeführtes Hochdruckreinigungsgerät umfassend ein Gehäuse (10). Das Gehäuse (10) weist eine Gehäuseaußenwand (12) auf. In dem Gehäuse (10) sind eine Pumpe (2) zur Erzeugung von Hochdruck auf eine Reinigungsflüssigkeit und ein Motor (3) zum Antrieb der Pumpe (2) angeordnet. Das Hochdruckreinigungsgerät (1) umfasst im Bereich der Gehäuseaußenwand (12) ein von außerhalb des Gehäuses (10) sichtbares Anzeigeelement (20). Das Anzeigeelement (20) ist mittels einer in dem Gehäuse (10) angeordneten Lichtquelle (32) beleuchtbar. In dem Gehäuse (10) ist ein Elektronikmodul (30) mit einem Elektronikgehäuse (31) angeordnet. In dem Elektronikgehäuse (31) ist eine Steuereinheit (33) angeordnet. Die Lichtquelle (32) ist an dem Elektronikmodul (30) angeordnet. Zwischen dem Elektronikmodul (30) und dem Anzeigeelement (20) ist ein Kanal (40) zur Leitung von Licht von der Lichtquelle (32) zu dem Anzeigeelement (20) angeordnet.

## Beschreibung

Die Erfindung betrifft ein handgeführtes Hochdruckreinigungsgerät nach dem Oberbegriff des Anspruchs 1.

Bei herkömmlichen handgeführten Hochdruckreinigungsgeräten ist der Bauraum in der Regel nicht gut ausgenutzt. Dies führt zum einen dazu, dass die Volumina der Gehäuse dieser Hochdruckreinigungsgeräte sehr groß sind. Dies macht die Geräte unhandlich und schwer führbar. Zum anderen sind zur Verbindung der elektronischen Komponenten eine Vielzahl von Kabeln erforderlich. Dadurch ist die Herstellung kostenintensiv und das handgeführte Hochdruckreinigungsgerät unnötig schwer. Außerdem sind die Verbindungsstellen zwischen Kabeln und elektronischen Bauteilen anfällig für durch Flüssigkeit verursachte Kurzschlüsse und an diesen Stellen treten häufig Brüche auf.

Der Erfindung liegt die Aufgabe zugrunde, ein gattungsgemäßes handgeführtes Hochdruckreinigungsgerät derart weiterzubilden, dass eine gute Ausnutzung des im Gehäuse zur Verfügung stehenden Bauraums bei möglichst geringer Kabelanzahl der Kabel zur Verbindung der elektronischen Bauteile möglich ist.

Diese Aufgabe wird durch ein handgeführtes Hochdruckreinigungsgerät mit den Merkmalen des Anspruchs 1 gelöst.

Die Erfindung sieht vor, dass die Lichtquelle an dem Elektronikmodul angeordnet ist, und dass zwischen dem Elektronikmodul und dem Anzeigeelement ein Kanal zur Leitung von Licht von der Lichtquelle zu dem Anzeigeelement angeordnet ist. Die Anordnung der Lichtquelle an dem Elektronikmodul eröffnet die Möglichkeit, die Lichtquelle kabellos mit der Steuereinheit des Elektronikmoduls, insbesondere mit dem Elektronikmodul, zu verbinden. Dadurch ist kein Kabel zwischen der Lichtquelle und der Steuereinheit, insbesondere dem Elektronikmodul, erforderlich. Beispielsweise kann die Lichtquelle mittels einer Lötverbindung oder einer Steckverbindung mit der Steuereinheit, insbesondere mit einer Leiterplatte der Steuereinheit, verbunden werden. Es kann auch vorgesehen sein, dass die Lichtquelle unmittelbar auf dem Elektronikmodul ausgebildet ist. Insbesondere kann es sich bei der Lichtquelle um eine LED (Light Emitting Diode) handeln. Insbesondere kann die Lichtquelle unmittelbar auf der Steuereinheit angeordnet sein. Insbesondere kann die Steuereinheit eine Platine sein. Insbesondere kann die Steuereinheit eine Leiterplatte sein.

Dadurch, dass zwischen dem Elektronikmodul und dem Anzeigeelement ein Kanal zur Leitung von Licht von der Lichtquelle zu dem Anzeigeelement angeordnet ist, kann das Elektronikmodul mit gewissem Spielraum im Gehäuse des handgeführten Hochdruckreinigungsgeräts platziert werden. Dies eröffnet eine Flexibilität und ermöglicht die geschickte Ausnutzung von vorhandenem Bauraum. Beispielsweise kann es erforderlich sein, das Elektronikmodul zur Wechselwirkung mit anderen elektronischen Bauteilen und/oder Betätigungselementen entfernt von dem Anzeigeelement anzuordnen. Durch den Kanal kann das Licht von der Lichtquelle dennoch unproblematisch zum Anzeigeelement geleitet werden. Hierfür sind im Gegensatz zum Stand der Technik keine Kabel erforderlich. Ebenso wenig ist eine weitere, entfernt vom Elektronikmodul angeordnete Platine erforderlich, auf der die Lichtquelle dann angeordnet wäre. Auch hierdurch können Bauraum eingespart und die Kabelanzahl reduziert werden.

Insbesondere ist das Elektronikgehäuse in einem Abstand zur Gehäuseaußenwand angeordnet. Insbesondere ist das Elektronikgehäuse in einem Abstand zum Anzeigeelement in dem Gehäuse angeordnet. Insbesondere ist das Anzeigeelement Bestandteil der Gehäuseaußenwand.

Der Kanal weist ein inneres Längsende auf. Das innere Längsende ist dem Elektronikgehäuse zugeordnet. Der Kanal weist ein äußeres Längsende auf. Das äußere Längsende ist dem Anzeigeelement zugeordnet. Der Kanal umschließt eine Längsmittelachse, die durch das äußere Längsende und das innere Längsende verläuft. Die Längsmittelachse verläuft in einer Längsrichtung. Der Kanal besitzt eine in Längsrichtung gemessene Kanallänge. Die Lichtquelle besitzt eine Lichtaustrittsfläche. Die Lichtaustrittsfläche besitzt eine größte Quellenausdehnung. Die Quellenausdehnung ist insbesondere radial zur Längsmittelachse gemessen. Vorteilhaft beträgt die Kanallänge mindestens 200%, insbesondere mindestens 300%, insbesondere mindestens 400% der größten Quellenausdehnung. Insbesondere beträgt die Kanallänge mindestens 10 mm, insbesondere mindestens 20 mm. Dadurch überbrückt der Kanal einen signifikanten Abstand zwischen der Lichtquelle und der Gehäuseaußenwand. Dadurch wird eine signifikante Länge an Kabel eingespart. Dies vereinfacht die Konstruktion des Hochdruckreinigungsgeräts. Außerdem spart dies Kosten und macht das Hochdruckreinigungsgerät weniger anfällig gegenüber Kurzschlüssen und Brücken in der Leitung des elektrischen Stroms.

Zweckmäßig verbindet der Kanal das Anzeigeelement unterbrechungsfrei mit der Lichtquelle. Insbesondere ist der Kanal zur Leitung von Licht hohl. Es kann aber auch vorgesehen sein, dass der Kanal durch einen Lichtleiter, insbesondere aus transparenten Kunststoff, gebildet ist.

Insbesondere besitzt der Kanal eine Kanalwand. Vorteilhaft verhindert die Kanalwand einen Lichtaustritt in Richtung quer zur Längsrichtung des Kanals zumindest teilweise. Insbesondere verhindert die Kanalwand den Lichtaustritt in Richtung quer zur Längsrichtung des Kanals vollständig. Insbesondere bewirkt die Kanalwand, dass auf dem Weg des Lichts von der Lichtquelle zu dem Anzeigeelement weniger als 20% Lichtintensität zur Außenseite des Kanals vordringt. Insbesondere bewirkt die Kanalwand, dass mehr als 70% der Lichtintensität auf dem Weg von der Lichtquelle zu dem Anzeigeelement im Kanal gehalten wird. Insbesondere bewirkt die Kanalwand, dass mindestens 70% der Lichtintensität des von der Lichtquelle ausgesendeten Lichts beim Anzeigeelement ankommt.

Zweckmäßig ist in dem Kanal ein Lichtleiter angeordnet. Insbesondere besteht der Lichtleiter aus transparentem Kunststoff. Insbesondere wird das von der Lichtquelle austretende Licht an der Grenzfläche zwischen dem Lichtleiter und der Kanalinnenwand reflektiert und auf diese Weise zu dem Anzeigeelement geleitet.

Insbesondere bewirkt der Lichtleiter, dass auf dem Weg des Lichts von der Lichtquelle zu dem Anzeigeelement weniger als 20% Lichtintensität zur Außenseite des Kanals vordringt. Insbesondere bewirkt der Lichtleiter, dass mehr als 70% der Lichtintensität auf dem Weg von der Lichtquelle zu dem Anzeigeelement im Kanal gehalten wird. Insbesondere bewirkt der Lichtleiter, dass mindestens 70% der Lichtintensität des von der Lichtquelle ausgesendeten Lichts beim Anzeigeelement ankommt.

Durch den Lichtleiter lässt sich das Licht von der Lichtquelle zu dem Anzeigeelement auf besonders einfache und kostengünstige Weise leiten. Insbesondere ist durch den Lichtleiter auch eine kurvige und/oder abgewinkelte Gestaltung des Verlaufs des Kanals möglich.

Insbesondere füllt der Lichtleiter den hohlen Kanal vollständig aus. Vorteilhaft liegt der Lichtleiter unmittelbar an der Kanalwand an. Vorteilhaft besteht zwischen dem Lichtleiter und der Kanalwand kein Hohlraum.

Das Gehäuse des handgeführten Hochdruckreinigungsgeräts umfasst insbesondere eine Austrittsöffnung zum Austritt der Reinigungsflüssigkeit aus dem Gehäuse. Die Reinigungsflüssigkeit tritt aus der Austrittsöffnung in einer Austrittsrichtung aus. Das Gehäuse besitzt ein der Austrittsöffnung in Richtung entgegengesetzt zur Austrittsrichtung gegenüberliegendes hinteres Ende. Zweckmäßig ist das Anzeigeelement im Bereich des hinteren Endes angeordnet. Dadurch kann der Benutzer das Anzeigeelement während des Austritts von Reinigungsflüssigkeit in Austrittsrichtung betrachten. Insbesondere zeigt das Anzeigeelement, insbesondere die Anzeigefläche, in Richtung entgegen der Austrittsrichtung.

Das Anzeigeelement ist im Bereich des hinteren Endes insbesondere so angeordnet, dass die Austrittsrichtung quer zu einer Anzeigefläche des Anzeigeelements verläuft. Insbesondere ist die Anzeigefläche in einem Winkel von 30° bis 90°, insbesondere von 40° bis 80°, insbesondere von 50° bis 70° orientiert. Dieser Winkel ist dem Gehäuse des handgeführten Hochdruckreinigungsgeräts zugewandt und öffnet insbesondere in Richtung von einem Handgriff des Gehäuses weg. Durch diese Orientierung der Anzeigefläche des Anzeigeelements kann der Bediener die Anzeigefläche besonders gut erkennen. Außerdem ist zusätzlich die Anordnung von Bedienelementen auf der Anzeigefläche des Anzeigeelements möglich. Insbesondere dann können diese Bedienelemente aufgrund der Orientierung der Anzeigefläche des Anzeigeelements ergonomisch angeordnet sein.

In vorteilhafter Weiterbindung der Erfindung umfasst das Hochdruckreinigungsgerät mehrere Lichtquellen und mehrere Kanäle. Insbesondere ist jedem der mehreren Lichtquellen ein Kanal zugeordnet. Dadurch können verschiedene Betriebszustände des Hochdruckreinigungsgeräts auf einfache Weise angezeigt werden. Beispielsweise kann durch die Anzahl von leuchtenden Lichtquellen der Ladezustand eines Akkus angegeben werden.

Der Motor besitzt eine Motordrehachse. Vorteilhaft ist das Elektronikgehäuse bezüglich der Richtung der Motordrehachse im Bereich des Motors angeordnet. Insbesondere überlappen sich das Elektronikgehäuse und der Motor bezüglich der Richtung der Motordrehachse. Vorteilhaft ist das Elektronikgehäuse vollständig innerhalb des Bereichs des Motors bezüglich der Richtung der Motordrehachse angeordnet. Insbesondere ist das Elektronikgehäuse bezüglich der Motordrehachse in Radialrichtung neben dem Motor angeordnet. Durch diese Anordnung des Elektronikgehäuses ergibt sich eine kompakte Gestaltung des handgeführten Reinigungsgeräts.

Insbesondere umfasst das Hochdruckreinigungsgerät einen Handgriff. Vorteilhaft ist der Handgriff durch das Gehäuse ausgebildet.

Der Motor besitzt eine dem Handgriff zugewandte Unterseite und eine dem Handgriff abgewandte Oberseite. Zweckmäßig ist das Elektronikmodul auf der dem Handgriff abgewandten Oberseite des Motors angeordnet. Dadurch ergibt sich eine sehr gute Ausnutzung des Bauraums.

Zweckmäßig ist an dem Gehäuse des handgeführten Hochdruckreinigungsgeräts ein Bedienelement angeordnet. Insbesondere ist mittels des Bedienelements über die Steuereinheit eine Funktion des Hochdruckreinigungsgeräts steuerbar. Zweckmäßig ist mittels der Steuereinheit die Lichtquelle steuerbar. Insbesondere ist die Lichtquelle mittels der Steuereinheit steuerbar, um einen Status der Funktion des Hochdruckreinigungsgeräts durch Beleuchtung des Anzeigeelements anzuzeigen. Durch die Anordnung der Lichtquelle an dem Elektronikmodul, das die Steuereinheit umfasst, ist eine Steuerung der Lichtquelle durch die Steuereinheit auf sehr einfache Weise möglich. Hierfür kann auf die Verlegung von Kabeln verzichtet werden. Die Lichtquelle kann die Steuereinheit mittels eines Steckkontakts oder mittels einer Lötverbindung direkt kontaktieren. Ebenso kann vorgesehen sein, dass die Lichtquelle, insbesondere in Form einer LED, unmittelbar auf der Steuereinheit angeordnet ist. Insbesondere kann die Lichtquelle Bestandteil einer insbesondere als Platine/Leiterplatte ausgebildeten Steuereinheit sein. Insbesondere kann die Lichtquelle in Form einer LED auf der Steuereinheit als Träger angeordnet, insbesondere aufgedampft sein.

Das Hochdruckreinigungsgerät umfasst insbesondere ein Betätigungselement. Das Betätigungselement ist zweckmäßig mittels des Bedienelements mechanisch betätigbar. Insbesondere sendet das Betätigungselement bei Betätigung ein Signal an die Steuereinheit. Vorteilhaft ist das Betätigungselement im Elektronikgehäuse angeordnet. Insbesondere erfolgt die Betätigung des Betätigungselements ausschließlich mechanisch. Durch die mechanische Betätigung des Betätigungselements mittels des Bedienelements ist zur Betätigung des Betätigungselements keine Verlegung von Kabeln erforderlich. Insbesondere kann das Betätigungselement unmittelbar auf der Steuereinheit, insbesondere auf der als Platine ausgebildeten Steuereinheit, angeordnet sein.

Zweckmäßig ist an dem Gehäuse ein Bedienhebel zur Betätigung des Motors und/oder zur Betätigung eines Zulaufventils angeordnet. Durch das Zulaufventil kann Reinigungsflüssigkeit in die Pumpe strömen. Vorteilhaft ist der Bedienhebel bezüglich der Austrittsrichtung der Reinigungsflüssigkeit aus der Austrittsöffnung zwischen dem Motor und dem Zulaufventil angeordnet. Durch diese Anordnung des Bedienhebels zwischen dem Motor und dem Zulaufventil ist eine kompakte Gestaltung des handgeführten Hochdruckreinigungsgeräts möglich. Der Bedienhebel kann auf kürzestem Weg sowohl den Motor als auch das Zulaufventil erreichen. Dadurch ist eine einfache und bauraumsparende Betätigung sowohl das Motors als auch des Zulaufventils durch den Bedienhebel möglich.

Insbesondere umfasst das handgeführte Hochdruckreinigungsgerät ein Getriebe zur Übertragung eines Drehmoments von dem Motor auf die Pumpe. Zweckmäßig ist das Getriebe bezüglich der Austrittsrichtung der Reinigungsflüssigkeit aus der Austrittsöffnung zwischen dem Motor und der Pumpe angeordnet. Der Bedienhebel besitzt ein dem Handgriff abgewandtes Längsende. Vorteilhaft ist das dem Handgriff abgewandte Längsende zur Betätigung des Zulaufventils bezüglich der Austrittsrichtung zwischen dem Getriebe und dem Zulaufventil angeordnet. Insbesondere ist das Zulaufventil bezüglich der Austrittsrichtung vor dem Getriebe angeordnet. Insbesondere ist das handgeführte Hochdruckreinigungsgerät so ausgelegt, dass das Längsende des Bedienhebels zur Betätigung des Zulaufventils in Austrittsrichtung bewegt werden muss. Insbesondere ist das handgeführte Hochdruckreinigungsgerät so ausgelegt, dass der Bedienhebel zur Betätigung des Motors in Richtung entgegen der Austrittsrichtung bewegt werden muss.

Insbesondere ist der Motor des handgeführten Hochdruckreinigungsgeräts ein Elektromotor. Zweckmäßig umfasst das handgeführte Hochdruckreinigungsgerät zur Energieversorgung des Elektromotors einen Akku. Insbesondere ist der Akku am Handgriff angeordnet. Insbesondere ist der Akku zumindest teilweise im Handgriff angeordnet. Zweckmäßig ist an der Gehäuseaußenwand des Gehäuses ein Anschlusselement zum Anschluss einer externen Flüssigkeitsquelle angeordnet.

Ein Ausführungsbeispiel der Erfindung wird im Folgenden anhand der Zeichnung erläutert. Es zeigen:
- Fig. 1: eine perspektivische Darstellung eines handgeführten Hochdruckreinigungsgeräts,
- Fig. 2: eine Schnittdarstellung eines Schnitts durch das handgeführte Hochdruckreinigungsgerät aus Fig. 1, wobei die Schnittebene durch ein Kanal zur Leitung von Licht von einer Lichtquelle zu einem Anzeigeelement verläuft und ein Zuleitungsventil von einem Bedienhebel unbetätigt ist,
- Fig. 3: die Schnittdarstellung aus Fig. 2, wobei das Zuleitungsventil von dem Bedienhebel betätigt ist,
- Fig. 4: eine vergrößerte Darstellung eines Details aus Fig. 2,
- Fig. 5: eine teilgeschnittene perspektivische Darstellung des handgeführten Hochdruckreinigungsgeräts aus Fig. 1, wobei die Schnittebene den Kanal schneidet,
- Fig. 6: eine perspektivische Darstellung eines Details einer Gehäusehälfte eines Gehäuses des Hochdruckreinigungsgeräts aus Fig. 1,
- Fig. 7: eine Detaildarstellung eines Schnitts mit einer Schnittebene parallel zur Schnittebene aus den Figuren 2 und 3, wobei die Schnittebene durch ein Bedienelement verläuft,
- Fig. 8: eine perspektivische Darstellung des Schnitts aus Fig. 7,
- Fig. 9: eine perspektivische Schnittdarstellung analog zu Fig. 8, jedoch mit parallel dazu versetzter Schnittebene, die den Kanal schneidet,
- Fig. 10: eine perspektivische Darstellung des Elektronikmoduls des handgeführten Hochdruckreinigungsgeräts aus Fig. 1,
- Fig. 11: eine perspektivische Schnittdarstellung eines Schnitts durch das Elektronikmodul aus Fig. 10, wobei die Schnittebene durch ein Betätigungselement verläuft.

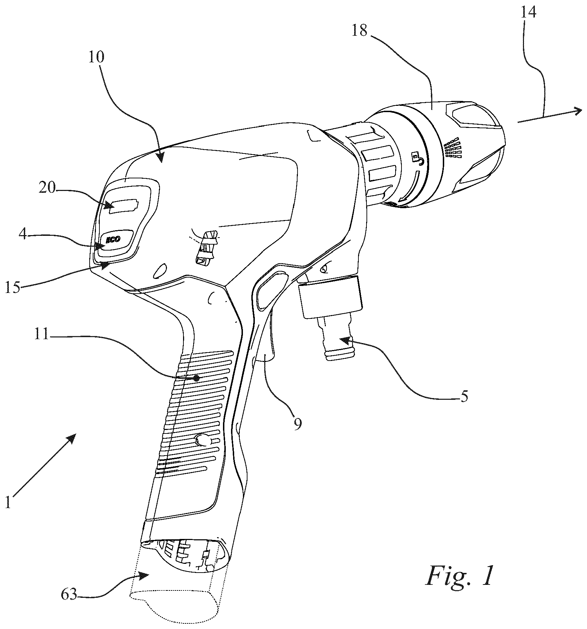

Fig. 1 zeigt ein Hochdruckreinigungsgerät 1. Das Hochdruckreinigungsgerät 1 dient zum Ausspritzen einer von dem Hochdruckreinigungsgerät 1 unter Druck gesetzten Reinigungsflüssigkeit. Das Hochdruckreinigungsgerät 1 ist im bestimmungsgemäßen Einsatz handführbar.

Das Hochdruckreinigungsgerät 1 kann die Reinigungsflüssigkeit unter einen Druck von mindestens 10 bar, insbesondere von mindestens 15 bar, insbesondere von mindestens 30 bar, insbesondere von mindestens 100 bar setzen. Insbesondere kann das Hochdruckreinigungsgerät 1 die Reinigungsflüssigkeit höchstens unter einen Druck von 600 bar, insbesondere von höchstens 500 bar setzen.

Das handgeführte Hochdruckreinigungsgerät 1 umfasst ein Gehäuse 10. Das Hochdruckreinigungsgerät 1 umfasst einen Handgriff 11. Der Handgriff 11 ist insbesondere im Wesentlichen stabförmig. Der Handgriff 11 erstreckt sich entlang einer Handgrifflängsachse 19. Der Handgriff 11 kann mit einer einzigen Hand umgriffen und gehalten werden. Das Hochdruckreinigungsgerät 1 kann durch den Handgriff 11 mit einer einzigen Hand geführt und bedient werden. Das Hochdruckreinigungsgerät 1 ist so ausgelegt, dass es beim Umgreifen des Handgriffs 11 mit einer einzigen Hand geführt werden kann. Im Ausführungsbeispiel ist der Handgriff 11 durch das Gehäuse 10 ausgebildet. Der Handgriff 11 ist integraler Bestandteil des Gehäuses 10. Das Hochdruckreinigungsgerät 1 besitzt einen Bedienhebel 9. Der Bedienhebel 9 ist beim Umgreifen des Handgriffs 11 mit derselben Hand, mit der der Handgriff 11 umgriffen wird, bedienbar. Insbesondere kann der Bedienhebel 9 mit einem zweigliedrigen Finger bedient werden.

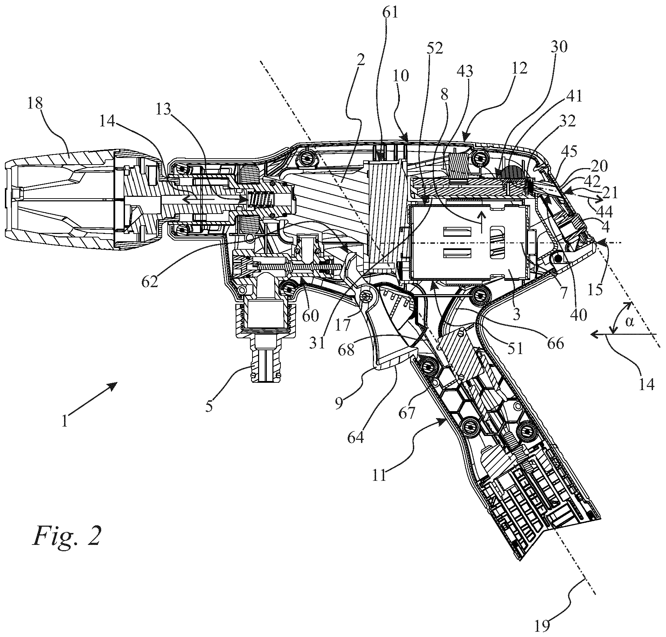

Wie in Fig. 2 dargestellt, umfasst das Hochdruckreinigungsgerät 1 einen Motor 3 und eine Pumpe 2. Die Pumpe 2 dient zur Erzeugung von Hochdruck auf eine Reinigungsflüssigkeit. Hierzu weist die Pumpe 2 nicht dargestellte, axial bewegliche Kolben auf. In Kolbenkammern wird die Reinigungsflüssigkeit unter Druck gesetzt, Die Pumpe 2 dient zur Förderung der Reinigungsflüssigkeit zu einer Ausspritzöffnung 13. Der Motor 3 dient zum Antrieb der Pumpe 2. Der Motor 3 ist in dem Gehäuse 10 angeordnet. Die Pumpe 2 ist in dem Gehäuse 10 angeordnet. Das Gehäuse 10 weist eine Gehäuseaußenwand 12 auf.

Der Motor 3 ist insbesondere ein Elektromotor. Im Ausführungsbeispiel umfasst das Hochdruckreinigungsgerät 1 zur Energieversorgung des Elektromotors einen in Fig. 1 schematisch dargestellten Akku 63. Im Ausführungsbeispiel ist der Akku 63 am Handgriff 11, insbesondere im Handgriff 11 angeordnet. Der Akku 63 ist in den Handgriff 11 gesteckt. Der Akku 63 ragt aus dem Handgriff 11 heraus.

Wie in Fig. 1 dargestellt, umfasst das Hochdruckreinigungsgerät 1 ein Anzeigeelement 20. Das Anzeigeelement 20 ist von außerhalb des Hochdruckreinigungsgeräts 1, insbesondere von außerhalb des Gehäuses 10 sichtbar. Das Anzeigeelement 20 ist im Bereich der Gehäuseaußenwand 12 angeordnet. Insbesondere ist das Anzeigeelement 20 Bestandteil der Gehäuseaußenwand 12. Insbesondere bildet das Anzeigeelement 20 einen Teil der Gehäuseaußenwand 12.

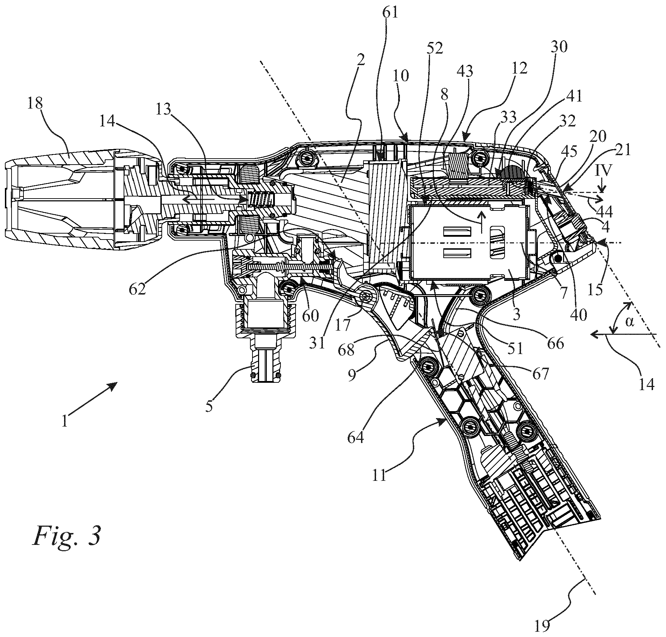

Wie in Den Figuren 2 und 3 dargestellt, besitzt das Hochdruckreinigungsgerät 1 die Austrittsöffnung 13. Die Austrittsöffnung 13 ist durch das Gehäuse 10 gebildet. Die Austrittsöffnung 13 dient zum Austritt der Reinigungsflüssigkeit aus dem Gehäuse 10. Im Ausführungsbeispiel ist an der Austrittsöffnung 13 ein Ausspritzkopf 18 angeordnet. Der Ausspritzkopf 18 besitzt eine Düse. Die Reinigungsflüssigkeit tritt aus der Austrittsöffnung 13 des Gehäuses 10 aus und in den Ausspritzkopf 18 ein. Durch den Ausspritzkopf 18, insbesondere durch die Düse, wird die Reinigungsflüssigkeit aus dem Hochdruckreinigungsgerät 1 ausgespritzt. Beim Ausspritzen der Reinigungsflüssigkeit aus dem Gehäuse 10, insbesondere aus dem Hochdruckreinigungsgerät 1 wird die Reinigungsflüssigkeit in einer Austrittsrichtung 14 ausgespritzt. Die Austrittsrichtung 14 verläuft in Richtung einer Längsachse des Hochdruckreinigungsgeräts 1. Der Motor 3 besitzt eine Motordrehachse 7. Die Austrittsrichtung 14 verläuft im Ausführungsbeispiel parallel zur Motordrehachse 7. Wie in Fig. 1 dargestellt, besitzt das Hochdruckreinigungsgerät 1, insbesondere das Gehäuse 10 ein hinteres Ende 15. Die Austrittsrichtung 14 zeigt in Richtung weg von dem hinteren Ende 15 hin zu der Austrittsöffnung 13.

Wie in Fig. 2 dargestellt, umfasst das Hochdruckreinigungsgerät 1 eine Lichtquelle 32. Die Lichtquelle 32 ist in dem Gehäuse 10 angeordnet. Das Anzeigeelement 20 ist mittels der Lichtquelle 32 beleuchtbar. Das Anzeigeelement 20 ist im Ausführungsbeispiel zumindest teilweise lichtdurchlässig. Das Anzeigeelement 20 ist im Ausführungsbeispiel zumindest teilweise transluzent. Das Anzeigeelement 20 ist im Ausführungsbeispiel zumindest teilweise transparent. Das von der Lichtquelle 32 ausgesendete Licht kann durch das Anzeigeelement 20 aus dem Hochdruckreinigungsgerät 1 austreten.

Das handgeführte Hochdruckreinigungsgerät 1 umfasst ein Elektronikmodul 30. Das Elektronikmodul 30 besitzt ein Elektronikgehäuse 31, wie in Fig. 2 dargestellt. Das Elektronikgehäuse 31 ist innerhalb des Gehäuses 10 angeordnet. Das Elektronikmodul 30 umfasst eine Steuereinheit 33. Die Steuereinheit 33 ist in dem Elektronikgehäuse 31 angeordnet.

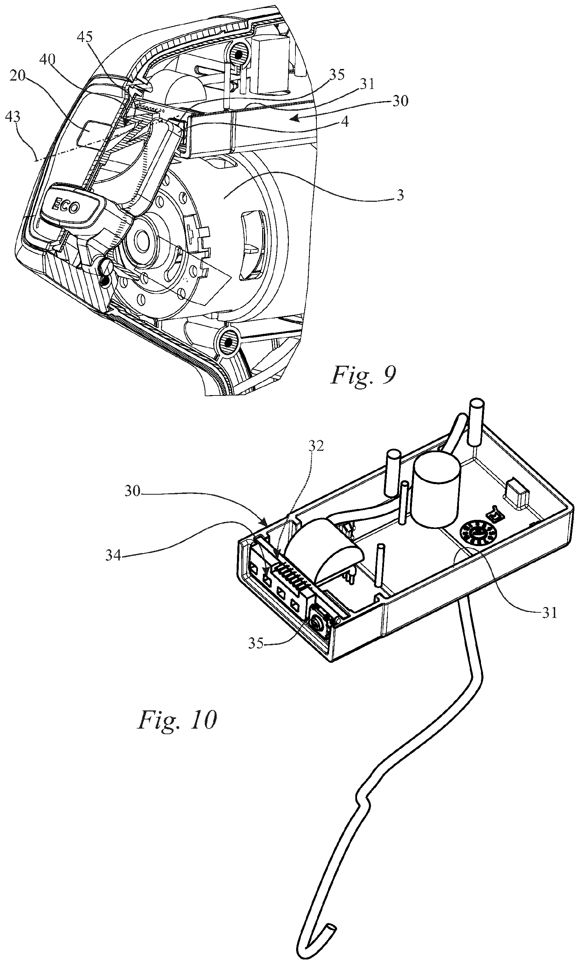

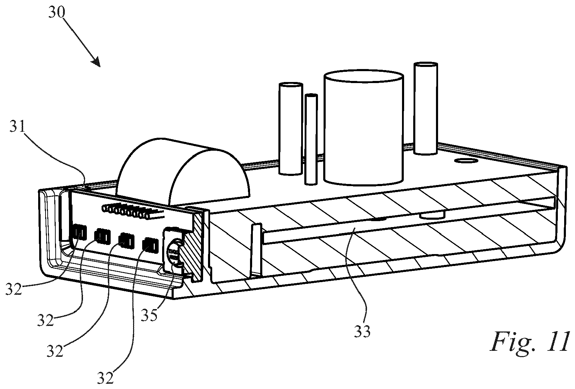

Die Lichtquelle 32 ist an dem Elektronikmodul 30 angeordnet. Wie in den Figuren 10 und 11 dargestellt, bildet die Lichtquelle 32 einen Teil der Außenwand des Elektronikgehäuses 31. Im Ausführungsbeispiel ist die Lichtquelle 32 Bestandteil des Elektronikmoduls 30. Im Ausführungsbeispiel ist die Lichtquelle 32 Bestandteil des Elektronikgehäuses 31.

Wie in Fig. 2 dargestellt, besitzt das Hochdruckreinigungsgerät 1 einen Kanal 40. Der Kanal 40 dient zur Leitung von Licht von der Lichtquelle 32 zu dem Anzeigeelement 20. Der Kanal 40 ist zwischen dem Elektronikmodul 30 und dem Anzeigeelement 20 angeordnet. Das von der Lichtquelle 32 ausgesendete Licht kann durch den Kanal 40 und durch das Anzeigeelement 20 aus dem Hochdruckreinigungsgerät 1 austreten.

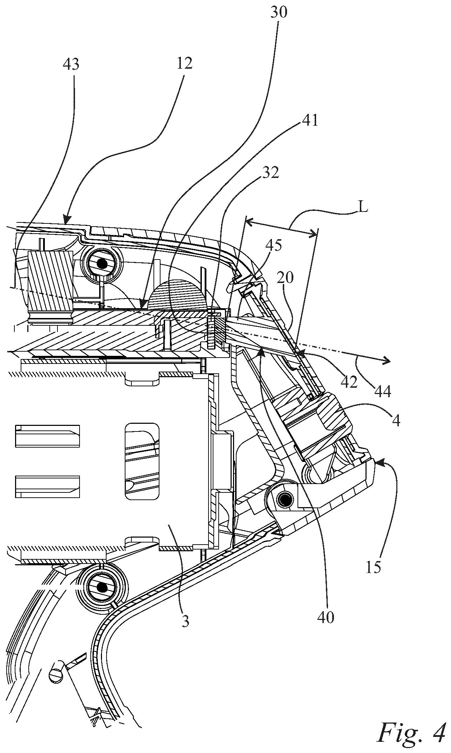

Fig. 4 zeigt den Kanal 40 im Detail. Im Ausführungsbeispiel ist der Kanal 40 zur Leitung von Licht hohl. Eine Kanalwand 45 des Kanals 40 begrenzt den Kanal 40. Es kann aber auch vorgesehen sein, dass der Kanal 40 aus Vollmaterial besteht. Beispielsweise kann es sich bei dem Kanal 40 um einen Lichtleiter handeln. Insbesondere kann der Kanal 40 aus transparentem Kunststoff bestehen. Im Ausführungsbeispiel ist der Kanal 40 hohl, und die Kanalwand 45 verhindert zumindest teilweise einen Lichtaustritt durch die Kanalwand 45. Der Kanal 40 ist im Wesentlichen röhrenförmig.

Der Kanal 40 weist ein inneres Längsende 41 auf. Das innere Längsende 41 ist dem Elektronikgehäuse 31 zugeordnet. Das innere Längsende 41 ist dem Elektronikgehäuse 31 zugewandt. Das innere Längsende 41 liegt an dem Elektronikgehäuse 31, insbesondere an der Lichtquelle 32 unmittelbar an. Der Kanal 40 weist ein äußeres Längsende 42 auf. Das äußere Längsende 42 ist dem Anzeigeelement 20 zugeordnet. Das äußere Längsende 42 des Kanals 40 liegt an dem Anzeigeelement 20 unmittelbar an. Das äußere Längsende 42 liegt an der Innenseite des Anzeigeelements 20 unmittelbar an. Der Kanal 40 umschließt eine Längsmittelachse 43. Im Ausführungsbeispiel läuft die Kanalwand 45 bezüglich einer Umfangsrichtung um die Längsmittelachse 43 geschlossen um. Die Längsmittelachse 43 verläuft durch das äußere Längsende 42 und durch das innere Längsende 41 in einer Längsrichtung 44. Die Längsmittelachse 43 verläuft durch einen Flächenschwerpunkt des inneren Längsendes 41 des Kanals 40 und durch einen Flächenschwerpunkt des äußeren Längsendes 42 des Kanals 40. Die Längsmittelachse 43 erstreckt sich im Ausführungsbeispiel geradlinig. Die Längsmittelachse 43 erstreckt sich in einer Längsrichtung 44. Die Längsrichtung 44 zeigt von der Lichtquelle 32 in Richtung auf das Anzeigeelement 20.

Im Ausführungsbeispiel ist die Kanalwand 45 von dem inneren Längsende 41 bis zu dem äußeren Längsende 42, insbesondere in Längsrichtung 44, insbesondere entlang der Längsmittelachse 43, vollständig geschlossen. Die Kanalwand 45 begrenzt den Kanal 40 in Richtung radial zur Längsmittelachse 43, insbesondere in Richtung radial zur Längsrichtung 44.

Im Ausführungsbeispiel verhindert die Kanalwand 45 des Kanals 40 einen Lichtaustritt in Richtung quer, insbesondere senkrecht zur Längsrichtung 44 des Kanals 40 zumindest teilweise. Die Lichtintensität des von der Lichtquelle 32 ausgesendeten und in den Kanal 40 eintretenden Lichts wird in dem Kanal 40 bis das Licht des Anzeigeelements 20 erreicht, höchstens um 20%, im Ausführungsbeispiel höchstens um 10% abgeschwächt. Insbesondere ist die Kanalwand 45 lichtundurchlässig.

Im Ausführungsbeispiel ist in dem Kanal 40 ein Lichtleiter angeordnet. Insbesondere besteht der Lichtleiter aus transparentem Kunststoff. Der Lichtleiter liegt mit seiner Außenseite an der Kanalwand 45 an. An der Grenzfläche zwischen dem Lichtleiter und der Kanalwand 45 wird das Licht der Lichtquelle 32 reflektiert, insbesondere total reflektiert. Insbesondere füllt ist der Lichtleiter aus Vollmaterial. Insbesondere füllt der Lichtleiter den Kanal 40 vollständig aus. Insbesondere ist zwischen dem Lichtleiter und der Kanalwand 45, insbesondere der Innenseite der Kanalwand 45, kein Hohlraum ausgebildet.

Das Elektronikgehäuse 31 ist in einem Abstand zum Anzeigeelement 20 angeordnet. Das Elektronikgehäuse 31 ist in einem Abstand zur Gehäuseaußenwand 12 angeordnet. Das Elektronikgehäuse 31 ist in dem Gehäuse 10 des Hochdruckreinigungsgeräts 1 angeordnet. Der Kanal 40 verbindet die Lichtquelle 32 mit dem Anzeigeelement 20. Der Kanal 40 verbindet das Anzeigeelement 20 unterbrechungsfrei mit der Lichtquelle 32.

Der Kanal 40 besitzt eine in Längsrichtung 44 gemessene Kanallänge L. Die Kanallänge L beträgt mindestens 10 mm. Im Ausführungsbeispiel beträgt die Kanallänge L mindestens 20 mm.

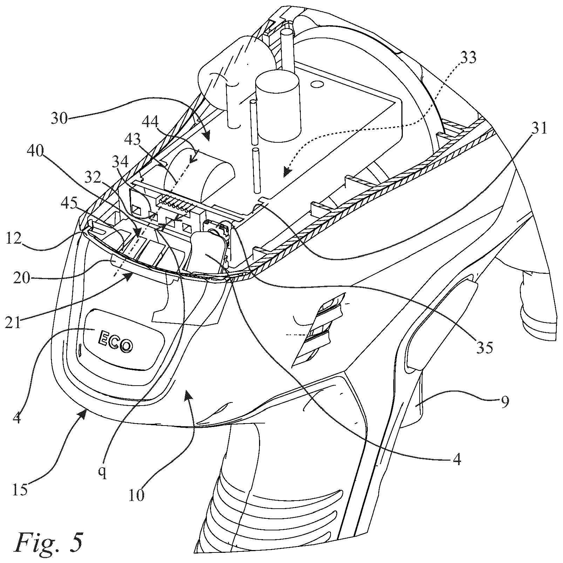

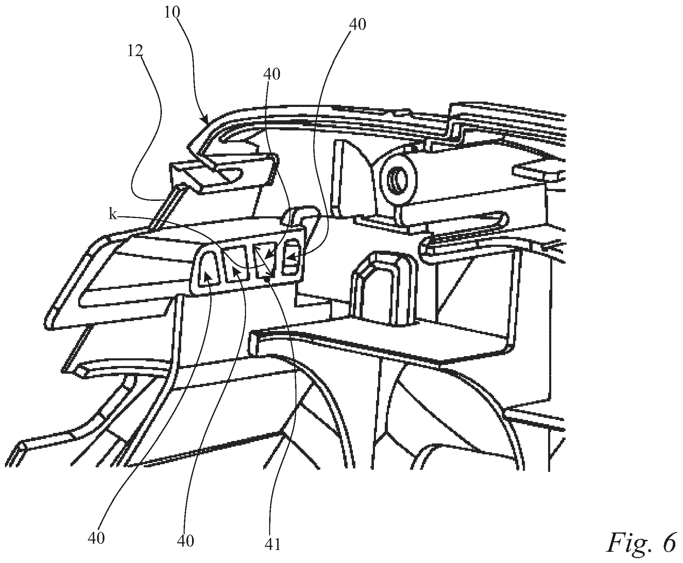

Wie in Fig. 5 und/oder in Fig. 10 dargestellt, weist die Lichtquelle 32 eine Lichtaustrittsfläche 34 auf. Wie in Fig. 6 dargestellt, weist der Kanal 40 an seinem inneren Längsende 41 eine Lichteintrittsfläche 46 auf. Im Ausführungsbeispiel entspricht die Größe der Lichtaustrittsfläche 34 der Größe der Lichteintrittsfläche 46. Die Lichtaustrittsfläche 34 besitzt eine in Fig. 5 dargestellte größte Quellenausdehnung q. Die größte Quellenausdehnung q ist die größte Ausdehnung der Lichtaustrittsfläche 34. Die größte Quellenausdehnung q ist in Richtung quer zur Längsmittelachse 43 gemessen. Die größte Quellenausdehnung q entspricht im Ausführungsbeispiel der Diagonale der rechteckigen Lichtaustrittsfläche 34. Die in Fig. 4 dargestellte Kanallänge L beträgt mindestens 200%, insbesondere mindestens 300%, im Ausführungsbeispiel mindestens 400% der in Fig. 5 dargestellten größten Quellenausdehnung q.

In Fig. 6 ist die größte Kanalausdehnung k der Lichteintrittsfläche 46 des Kanals 40 eingezeichnet. Die größte Kanalausdehnung k ist die größte Ausdehnung der Lichteintrittsfläche 46. Die größte Kanalausdehnung k ist in Richtung quer zur Längsmittelachse 43 gemessen. Die Kanallänge L des Kanals 40 beträgt mindestens 200%, insbesondere mindestens 300%, insbesondere mindestens 400% der größten Kanalausdehnung k.

Wie in den Figuren 2 und 3 dargestellt, liegt die Austrittsöffnung 13 dem hinteren Ende 15 in Richtung der Austrittsrichtung 14 gegenüber. Das Anzeigeelement 20 ist im Bereich des hinteren Endes 15 angeordnet. Im Ausführungsbeispiel ist das Anzeigeelement 20 so angeordnet, dass die Austrittsrichtung 14 quer zu einer Anzeigefläche 21 des Anzeigeelements 20 verläuft. Im Ausführungsbeispiel ist die Anzeigefläche 21 des Anzeigeelements 20 eben. Die Anzeigefläche 21 erstreckt sich in einer Ebene. Es kann aber auch vorgesehen sein, dass die Anzeigefläche gewölbt ist. Die Anzeigefläche 21 verläuft schräg zur Austrittsrichtung 14. Die Austrittsrichtung 14 ist zur Anzeigefläche 21 in einem Winkel α orientiert, insbesondere in einer Schnittebene, die die Längsmittelachse 43 enthält und senkrecht zur Lichtaustrittsfläche 34 verläuft. Der Winkel α öffnet in Richtung hin zum Gehäuse 10 und in Richtung weg vom Handgriff 11. Der Winkel α beträgt von 10° bis 90°, insbesondere von 20° bis 80°, insbesondere von 30° bis 70°, im Ausführungsbeispiel von 40° bis 60°. Die Anzeigefläche 21 verläuft insbesondere in einer Schnittebene, die die Längsmittelachse 43 enthält und senkrecht zur Lichtaustrittsfläche 34 verläuft, im Wesentlichen parallel zur Handgrifflängsachse 19. Die Anzeigefläche 21 zeigt in Richtung entgegen der Austrittsrichtung 14. Die Anzeigefläche 21 ist im Betrieb des Hochdruckreinigungsgeräts 1 dem Bediener zugewandt.

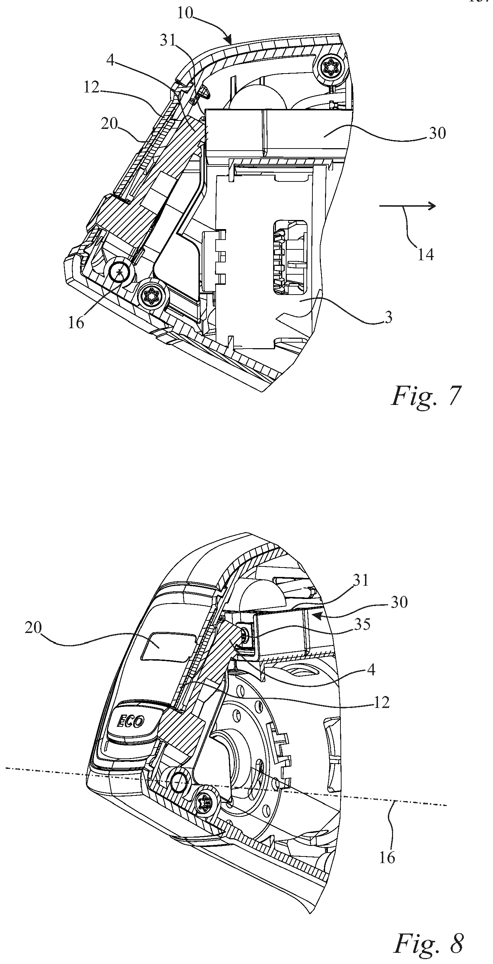

Das Hochdruckreinigungsgerät 1 umfasst ein Bedienelement 4. Das Bedienelement 4 ist an dem Gehäuse 10 angeordnet. Im Ausführungsbeispiel ist das Bedienelement 4 im Bereich des Anzeigeelements 20 angeordnet. Im Ausführungsbeispiel ist das Bedienelement 4 im Bereich der Anzeigefläche 21 angeordnet. Eine Bedienfläche des Bedienelements 4 erstreckt sich in Richtung parallel zur Anzeigefläche 21. Dadurch ist eine komfortable Bedienung des Bedienelements 4 durch einen Benutzer möglich. Das Bedienelement 4, insbesondere die Bedienfläche des Bedienelements 4 ist dem Benutzer auch im Betrieb des Hochdruckreinigungsgeräts 1 zugewandt. Dadurch ergibt sich eine ergonomische Bedienung des Hochdruckreinigungsgeräts 1. Insbesondere ist die Bedienfläche schräg zur Austrittsrichtung 14 orientiert. Insbesondere ist die Bedienfläche in im Winkel α zur Austrittsrichtung 14 orientiert. Insbesondere ist die Bedienfläche im Betrieb des Hochdruckreinigungsgeräts 1 dem Benutzer zugewandt. Das Bedienelement 4 kann durch Drücken, insbesondere durch Drücken der Bedienfläche bedient werden. Das Bedienelement 4 ist um eine in den Figuren 7 und 8 dargestellte Schwenkachse 16 verschwenkbar gelagert. Insbesondere ist das Bedienelement 4 verschwenkbar am Gehäuse 10 gelagert. Beim Drücken der Bedienfläche des Bedienelements 4 wird das Bedienelement 4 um die Schwenkachse 16 verschwenkt.

Mittels des Bedienelements 4 ist über die Steuereinheit 33 eine Funktion des Hochdruckreinigungsgeräts 1 steuerbar. Bei der Funktion des Hochdruckreinigungsgeräts 1 kann es sich beispielsweise um eine Boost-Funktion oder um einen Eco-Modus des Hochdruckreinigungsgeräts 1 handeln. Im Eco-Modus wird zum Betrieb des Motors 3 weniger Strom aus dem Akku 63 gezogen. Im Eco-Modus wird der Motor 3 mit einer geringeren Drehzahl als normalerweise betrieben. Im Boost-Modus wird zum Betrieb des Motors 3 mehr Strom aus dem Akku 63 gezogen. Im Boost-Modus wird der Motor 3 mit einer größeren Drehzahl als normalerweise betrieben.

Das Hochdruckreinigungsgerät 1 umfasst ein in Fig. 8 dargestelltes Betätigungselement 35. Das Betätigungselement 35 ist mittels des Bedienelements 4 mechanisch bestätigbar. Beim Drücken des Bedienelements 4 über die Bedienfläche des Bedienelements 4 wird das Bedienelement 4 um die Schwenkachse 16 verschwenkt und betätigt hierbei das Betätigungselement 35. Die Bedienfläche des Bedienelements 4 ist zwischen der Schwenkachse 16 und dem Betätigungselement 35 angeordnet. Das Betätigungselement 35 ist am, insbesondere im Elektronikgehäuse 31 angeordnet. Das Betätigungselement 35 ist in einem Abstand zur Gehäuseaußenwand 12 angeordnet. Bei Betätigung des Betätigungselements 35 sendet das Betätigungselement 35 ein Signal an die Steuereinheit 33. Das Betätigungselement 35 kann durch Drücken des Bedienelements 4 rein mechanisch betätigt werden.

Das Bedienelement 4 ist zwischen der Gehäuseaußenwand 12 und dem Elektronikmodul 30 angeordnet. Das Bedienelement 4 ist in Richtung quer zur Austrittsrichtung 14 neben dem Kanal 40 angeordnet. Durch die schräge Orientierung der Anzeigefläche 21, die einen Teil der Gehäuseaußenwand 12 bildet, zu der Austrittsrichtung 14 kann das Bedienelement 4 platzsparend im Gehäuse 10 angeordnet werden. Dies zeigen insbesondere die Figuren 7 bis 9.

Es kann vorgesehen sein, dass mittels der Steuereinheit 33 die Lichtquelle 32 steuerbar ist, um einen Status der Funktion, insbesondere der durch das Bedienelement 4 steuerbaren Funktion, durch Beleuchtung des Anzeigeelements 20 anzuzeigen.

Im Ausführungsbeispiel zeigt das Anzeigeelement 20 den Ladestatus des Akkus 63 an. Wie in Fig. 6 dargestellt, umfasst das Hochdruckreinigungsgerät 1 mehrere Kanäle 40. Wie in Fig. 11 dargestellt, umfasst das Hochdruckreinigungsgerät 1 mehrere Lichtquellen 32. Jeder der mehreren Lichtquellen 32 ist ein Kanal 40 zugeordnet. Die vorstehende Beschreibung des Kanals 40 trifft auf jeden der Kanäle 40 zu. Dasselbe gilt für die Lichtquellen 32.

Um den Zustand der Akkuladung des Akkus 63 anzuzeigen, beleuchten je nach Ladezustand eine unterschiedliche Anzahl an Lichtquellen 32 das Anzeigeelement 20.

Wie in den Figuren 2 und 3 dargestellt, ist das Elektronikgehäuse 31 bezüglich der Richtung der Motordrehachse 7 im Bereich des Motors 3 angeordnet. Das Elektronikgehäuse 31 überlappt den Motor 3 bezüglich der Richtung der Motordrehachse 7. Das Elektronikgehäuse 31 überlappt den Motor 3 bezüglich der Austrittsrichtung 14. Im Ausführungsbeispiel ist das Elektronikgehäuse 31 bezüglich der Austrittsrichtung 14 vollständig im Bereich des Motors 3 angeordnet. Im Ausführungsbeispiel ist das Elektronikgehäuse 31 bezüglich der Richtung der Motordrehachse 7 vollständig im Bereich des Motors 3 angeordnet. Das Elektronikgehäuse 31 ist bezüglich der Motordrehachse 7 in Radialrichtung 8 neben dem Motor 3 angeordnet. Der Motor 3 weist eine dem Handgriff 11 zugewandte Unterseite 51 auf. Der Motor 3 weist eine dem Handgriff 11 abgewandte Oberseite 52 auf. Das Elektronikmodul 30 ist auf der dem Handgriff 11 abgewandten Oberseite 52 des Motors 3 angeordnet. Bezüglich der Radialrichtung 8 ist das Elektronikmodul 30, insbesondere das Elektronikgehäuse 31, im Bereich, insbesondere vollständig im Bereich der Pumpe 2 angeordnet.

Das Hochdruckreinigungsgerät 1 umfasst ein Getriebe 61 zur Übertragung eines Drehmoments von dem Motor 3 auf die Pumpe 2. Das Getriebe 61 ist bezüglich der Austrittsrichtung 14 der Reinigungsflüssigkeit zwischen dem Motor 3 und der Pumpe 2 angeordnet. Das Elektronikmodul 30, insbesondere das Elektronikgehäuse 31, ist bezüglich der Radialrichtung 8 vollständig im Bereich des Getriebes 61 angeordnet.

Das Bedienelement 4 ist bezüglich der Radialrichtung 8 im Bereich des Motors 3 angeordnet. Das Bedienelement 4 ist bezüglich der Radialrichtung 8 im Bereich des Elektronikmoduls 30, insbesondere des Elektronikgehäuses 31 angeordnet. Das Bedienelement 4 ist bezüglich der Austrittsrichtung 14 hinter dem Motor 3 angeordnet. Das Bedienelement 4 ist bezüglich der Austrittsrichtung 14 hinter dem Elektronikmodul 30, insbesondere hinter dem Elektronikgehäuse 31 angeordnet.

Das Elektronikmodul 30 umfasst ein einziges Elektronikgehäuse 31. Die gesamte Steuerelektronik des Hochdruckreinigungsgeräts 1 ist in dem einzigen Elektronikmodul 30 untergebracht. Dies ermöglicht eine einfache Herstellung des Hochdruckreinigungsgeräts 1. Durch die zentrale Anordnung der Steuerelektronik in einem einzigen Elektronikmodul 30 kann die Steuerelektronik auf einfache Weise vor Feuchtigkeit geschützt werden.

Fig. 10 zeigt, dass das Elektronikgehäuse 31 im Wesentlichen wannenförmig ist. Eine Seitenwand des Elektronikgehäuses 31 ist durch die Lichtquelle 32, insbesondere durch eine Platine der Lichtquelle 32 gebildet. Die Lichtquelle 32 zeigt in Richtung entgegen der Austrittsrichtung 14.

Wie in Fig. 11 dargestellt, ist die Steuereinheit 33 in Vergussmasse eingegossen. Das Elektronikgehäuse 31 bildet einen Aufnahmeraum für die Vergussmasse und die Steuereinheit 33. Ein Teil der Gehäusewand des Elektronikgehäuses 31 ist durch die Lichtquelle 32, insbesondere durch einen Träger der Lichtquelle 32 gebildet. Insbesondere sind LEDs der Lichtquelle 32 auf dem Träger angeordnet. Der Träger bildet eine Seitenwand des Elektronikgehäuses 31. Dies ist auch in Fig. 10 ersichtlich. Die Vergussmasse liegt unmittelbar an dem Träger der Lichtquelle 32 an.

Die Lichtquelle 32 ist elektrisch direkt mit der Steuereinheit 33, insbesondere mit der Leiterplatte der Steuereinheit 33 verbunden. Die Lichtquelle 32 ist kabellos elektrisch mit der Steuereinheit 33, insbesondere mit der Leiterplatte der Steuereinheit 33 verbunden. Im Ausführungsbeispiel ist die Lichtquelle 32, insbesondere die Leiterplatte der Lichtquelle 32, durch einen Lötverbindung mit der Steuereinheit 33, insbesondere mit der Leiterplatte der Steuereinheit 33 verbunden. Es kann auch vorgesehen sein, dass die Lichtquelle 32, insbesondere die Leiterplatte der Lichtquelle 32, durch eine Steckbindung elektrisch mit der Steuereinheit 33, insbesondere mit der Leiterplatte der Steuereinheit 33 verbunden ist.

Das Hochdruckreinigungsgerät 1 umfasst einen in den Figuren 2 und 3 dargestellten Bedienhebel 9. Der Bedienhebel 9 dient zur Betätigung des Motors 3 und/oder zur Betätigung eines Zulaufventils 60. Durch das Zulaufventil 60 kann Reinigungsflüssigkeit in die Pumpe 2 strömen. Im geschlossenen Zustand des Zulaufventils 60 ist die Zufuhr von Reinigungsflüssigkeit zur Pumpe 2 unterbrochen. Im Ausführungsbeispiel dient der Bedienhebel 9 zur Betätigung des Motors 3 und des Zulaufventils 60. Der Bedienhebel 9 ist bezüglich der Austrittsrichtung 14 zwischen dem Motor 3 und dem Zulaufventil 60 angeordnet. Das Zulaufventil 60 ist fluidisch zwischen der Pumpe 2 und einem Anschlusselement 5 angeordnet. Das Anschlusselement 5 dient zum Anschluss einer externen Flüssigkeitsquelle. Das Anschlusselement 5 dient zum Anschluss beispielsweise eines Schlauches an das Hochdruckreinigungsgerät 1. Die externe Flüssigkeitsquelle kann beispielsweise ein Hauswasseranschluss sein. Bei der externen Flüssigkeitsquelle kann es sich aber auch um ein Wasserreservoir, beispielsweise einen Wassertank oder einen Teich handeln. Das Anschlusselement 5 ist bezüglich der Austrittsrichtung 14 vor dem Handgriff 11 angeordnet. Das Anschlusselement 5 ist bezüglich der Radialrichtung 8 der Motordrehachse 7 unter der Unterseite 51 des Motors 3 angeordnet. Das Anschlusselement 5 ist bezüglich der Austrittsrichtung 14 vor der Pumpe 2 angeordnet. Das Anschlusselement 5 ist bezüglich der Austrittsrichtung 14 auf Höhe der Austrittsöffnung 13 angeordnet.

Der Bedienhebel 9 ist um eine Bedienhebelschwenkachse 17 schwenkbar. Der Bedienhebel 9 ist schwenkbar am Gehäuse 10 des Hochdruckreinigungsgeräts 1 gelagert. In Abhängigkeit der Schwenkstellung des Bedienhebels 9 ist das Zulaufventil 60 geschlossen oder geöffnet. Fig. 2 zeigt das Zulaufventil 60 in einer geschlossenen Stellung. Fig. 3 zeigt das Zulaufventil 60 in einer offenen Stellung.

Der Bedienhebel 9 besitzt ein dem Handgriff 11 abgewandtes Längsende 62. Das Längsende 62 des Bedienhebels 9 ist bezüglich der Austrittsrichtung 14 zwischen dem Motor 3 und dem Zulaufventil 60 angeordnet. Das Längsende 62 ist bezüglich der Austrittsrichtung 14 zwischen dem Getriebe 61 und dem Zulaufventil 60 angeordnet. Mittels des Längsendes 62 des Bedienhebels 9 ist das Zulaufventil 60 betätigbar, insbesondere rein mechanisch betätigbar. Wenn das Längsende 62 in Austrittsrichtung 14 nach vorne geschwenkt wird, wird das Zulaufventil 60 in Richtung seiner offenen Stellung gedrückt. Wenn das Längsende 62 entgegen der Austrittsrichtung 14 um die Bedienhebelschwenkachse 17 verschwenkt wird, ermöglicht dies eine Rückführung des Zulaufventils 60 in seinen geschlossenen Zustand. Hierfür ist das Ventilglied des Zulaufventils 60 in den geschlossenen Zustand vorgespannt. Der Bedienhebel 9 ist ebenfalls durch eine Feder vorgespannt. Der Bedienhebel 9 ist in die Stellung vorgespannt, in der das Längsende 62 das Zulaufventil 60 nicht betätigt. Der Bedienhebel 9 besitzt ein unteres Längsende 64. Das untere Längsende 64 ist dem Handgriff 11 zugewandt. Die Bedienhebelschwenkachse 17 ist zwischen dem Längsende 62 und dem unteren Längsende 64 angeordnet. Das Längsende 62 wird auch als oberes Längsende 62 bezeichnet.

Das Hochdruckreinigungsgerät 1 umfasst einen Schalter 65. Der Schalter 65 dient zum Ein- und Ausschalten des Motors 3. Im Ausführungsbeispiel ist der Schalter 65 ein Tastschalter. Im Ausführungsbeispiel ist der Schalter 65 ein Mikroschalter. In Abhängigkeit der Stellung des Bedienhebels 9 ist der Schalter 65 an oder aus. Der Schalter 65 ist mit der Steuereinheit 33 über eine in den Figuren 2, 3 und 10 dargestellte Signalleitung 66 verbunden. Im Ausführungsbeispiel ist die Signalleitung 66 ein Kabel. Es kann aber auch vorgesehen sein, dass die Signalleitung eine drahtlose Verbindung ist.

Am unteren Längsende 64 des Bedienhebels 9 ist eine Tastfläche 67 ausgebildet, wie in den Figuren 2 und 3 dargestellt. Mittels der Tastfläche 67 wird der Schalter 65 betätigt. Im Ausführungsbeispiel geschieht dies mittelbar über eine Blattfeder 68. Es kann aber auch vorgesehen sein, dass die Tastfläche 67 den Schalter 65 unmittelbar betätigt. Zur Betätigung des Schalters 65 wird das untere Längsende 64 in Richtung entgegen der Austrittsrichtung 14 um die Bedienhebelschwenkachse 17 verschwenkt. Hierbei drückt das untere Längsende 64 des Bedienhebels 9 die Blattfeder 63 gegen den Schalter 65. Über die Signalleitung 66 wird der Steuereinheit 33 mitgeteilt, dass der Schalter 65 betätigt ist. Die Steuereinheit 33 schaltet den Motor 3 ein. Der Motor 3 treibt die Pumpe 2 über das Getriebe 61 an. Hierbei wird Reinigungsflüssigkeit gefördert. Beim Loslassen des Bedienhebels 9 wirkt die Blattfeder 67 und drückt den Bedienhebel 9 in seine unbetätigte Stellung. Dann ist der Schalter 65 nicht mehr betätigt. Dies wird der Steuereinheit 33 über die Signalleitung 66 übermittelt. Die Steuereinheit 33 schaltet daraufhin den Motor 3 aus. Es wird keine Reinigungsflüssigkeit mehr gefördert.

Im Betrieb steuert die Steuereinheit 33 die Lichtquelle 32. Wenn die Steuereinheit 33 an die Lichtquelle 32 ein entsprechendes Signal, insbesondere ein elektrisches Signal sendet, leuchtet die Lichtquelle 32. Das von der Lichtquelle 32 ausgesandte Licht tritt aus der Lichtaustrittsfläche 32 aus und durch die Lichteintrittsfläche 46 in den Kanal 40 ein. Insbesondere tritt das Licht in den in dem Kanal 40 angeordneten Lichtleiter ein. An der Grenzfläche zwischen Lichtleiter und Kanalwand 45 wird das Licht zum Großteil reflektiert und so wieder in das Innere des Lichtleiters gelenkt. Am äußeren Längsende 42 des Kanals 40 tritt das Licht aus dem Lichtleiter aus und beleuchtet das Anzeigeelement 20, insbesondere die Anzeigefläche 21. Im Ausführungsbeispiel liegt der Lichtleiter unmittelbar an dem Anzeigeelement 20 an.

Der Kanal 40 erstreckt sich ausgehen von dem Elektronikmodul 30 im Wesentlichen in Richtung entgegen der Austrittsrichtung 14. In einer Seitenansicht senkrecht auf die Handgrifflängsachse 19 und senkrecht auf die Austrittsrichtung 14 schließt die Längsmittelachse 43 des Kanals 40 mit der Austrittsrichtung 14 einen Winkel von weniger als 30°, insbesondere von weniger als 20° ein.

## Patentansprüche

1. Handgeführtes Hochdruckreinigungsgerät umfassend ein Gehäuse (10), wobei das Gehäuse (10) eine Gehäuseaußenwand (12) aufweist, wobei in dem Gehäuse (10) eine Pumpe (2) zur Erzeugung von Hochdruck auf eine Reinigungsflüssigkeit und ein Motor (3) zum Antrieb der Pumpe (2) angeordnet sind, wobei das Hochdruckreinigungsgerät (1) im Bereich der Gehäuseaußenwand (12) ein von außerhalb des Gehäuses (10) sichtbares Anzeigeelement (20) umfasst, wobei das Anzeigeelement (20) mittels einer in dem Gehäuse (10) angeordneten Lichtquelle (32) beleuchtbar ist, wobei in dem Gehäuse (10) ein Elektronikmodul (30) mit einem Elektronikgehäuse (31) angeordnet ist, wobei in dem Elektronikgehäuse (31) eine Steuereinheit (33) angeordnet ist,
**dadurch gekennzeichnet, dass** die Lichtquelle (32) an dem Elektronikmodul (30) angeordnet ist, und dass zwischen dem Elektronikmodul (30) und dem Anzeigeelement (20) ein Kanal (40) zur Leitung von Licht von der Lichtquelle (32) zu dem Anzeigeelement (20) angeordnet ist.

2. Hochdruckreinigungsgerät nach Anspruch 1,
**dadurch gekennzeichnet, dass** das Elektronikgehäuse (31) in einem Abstand zur Gehäuseaußenwand (12), insbesondere zum Anzeigeelement (20), in dem Gehäuse (10) angeordnet ist, und insbesondere dass das Anzeigeelement (20) Bestandteil der Gehäuseaußenwand (12) ist.

3. Hochdruckreinigungsgerät nach Anspruch 1 oder 2,
**dadurch gekennzeichnet, dass** der Kanal (40) ein inneres Längsende (41) aufweist, das dem Elektronikgehäuse (31) zugeordnet ist, dass der Kanal (40) ein äußeres Längsende (42) aufweist, das dem Anzeigeelement (20) zugeordnet ist, dass der Kanal (40) eine Längsmittelachse (43) umschließt, die durch das äußere Längsende (42) und das innere Längsende (41) in einer Längsrichtung (44) verläuft, dass der Kanal (40) eine in Längsrichtung (44) gemessene Kanallänge (L) besitzt, dass die Lichtquelle (32) eine Lichtaustrittsfläche (34) besitzt, die eine größte Quellenausdehnung (q) besitzt, und dass die Kanallänge (L) mindestens 200%, insbesondere mindestens 300%, insbesondere mindestens 400% der größten Quellenausdehnung (q) beträgt.

4. Hochdruckreinigungsgerät nach einem der Ansprüche 1 bis 3,
**dadurch gekennzeichnet, dass** die Kanallänge (L) mindestens 10 mm, insbesondere mindestens 20 mm beträgt.

5. Hochdruckreinigungsgerät nach einem der Ansprüche 1 bis 4,
**dadurch gekennzeichnet, dass** der Kanal (40) das Anzeigeelement (20) unterbrechungsfrei mit der Lichtquelle (32) verbindet.

6. Hochdruckreinigungsgerät nach einem der Ansprüche 1 bis 5,
**dadurch gekennzeichnet, dass** der Kanal (40) zur Leitung von Licht hohl ist, und insbesondere dass eine Kanalwand (45) des Kanals (40) einen Lichtaustritt in Richtung quer zur Längsrichtung (44) des Kanals (40) zumindest teilweise verhindert.

7. Hochdruckreinigungsgerät nach Anspruch 6,
**dadurch gekennzeichnet, dass** in dem Kanal (40) ein Lichtleiter, insbesondere aus transparentem Kunststoff, angeordnet ist.

8. Hochdruckreinigungsgerät nach einem der Ansprüche 1 bis 7,
**dadurch gekennzeichnet, dass** das Gehäuse (10) eine Austrittsöffnung (13) zum Austritt der Reinigungsflüssigkeit aus dem Gehäuse (10) in einer Austrittsrichtung (14) umfasst, dass das Gehäuse (10) ein der Austrittsöffnung (13) in Richtung entgegengesetzt zur Austrittsrichtung (14) gegenüberliegendes hinteres Ende (15) besitzt, und dass das Anzeigeelement (20) im Bereich des hinteren Endes (15) angeordnet ist, insbesondere so, dass die Ausspritzrichtung (14) quer zu einer Anzeigefläche (21) des Anzeigeelements (20) verläuft.

9. Hochdruckreinigungsgerät nach einem der Ansprüche 1 bis 8,
**dadurch gekennzeichnet, dass** der Motor (3) eine Motordrehachse (7) besitzt, und dass das Elektronikgehäuse (31) bezüglich der Richtung der Motordrehachse (7) im Bereich des Motors (3) und bezüglich der Motordrehachse (7) in Radialrichtung (8) neben dem Motor (3) angeordnet ist.

10. Hochdruckreinigungsgerät nach einem der Ansprüche 1 bis 9,
**dadurch gekennzeichnet, dass** das Hochdruckreinigungsgerät (1) einen Handgriff (11) umfasst, insbesondere dass der Handgriff (11) durch das Gehäuse (10) ausgebildet ist, dass der Motor (3) eine dem Handgriff (11) zugewandte Unterseite (51) und eine dem Handgriff (11) abgewandte Oberseite (52) besitzt, und dass das Elektronikmodul (30) auf der dem Handgriff (11) abgewandten Oberseite (52) des Motors (3) angeordnet ist.

11. Hochdruckreinigungsgerät nach einem der Ansprüche 1 bis 10,
**dadurch gekennzeichnet, dass** an dem Gehäuse (10) ein Bedienelement (4) angeordnet ist, dass mittels des Bedienelements (4) über die Steuereinheit (33) eine Funktion des Hochdruckreinigungsgeräts (1) steuerbar ist, und dass mittels der Steuereinheit (33) die Lichtquelle (32) steuerbar ist, um einen Status der Funktion durch Beleuchtung des Anzeigeelements (20) anzuzeigen.

12. Hochdruckreinigungsgerät nach Anspruch 11,
**dadurch gekennzeichnet, dass** das Hochdruckreinigungsgerät (1) ein Betätigungselement (35) umfasst, das mittels des Bedienelements (4) mechanisch betätigbar ist, dass das Betätigungselement (35) ein Signal an die Steuereinheit (33) sendet, und dass das Betätigungselement (35) im Elektronikgehäuse (31) angeordnet ist.

13. Hochdruckreinigungsgerät nach einem der Ansprüche 1 bis 12,
**dadurch gekennzeichnet, dass** an dem Gehäuse (10) ein Bedienhebel (9) zur Betätigung des Motors (3) und/oder zur Betätigung eines Zulaufventils (60), durch das Reinigungsflüssigkeit in die Pumpe (2) strömen kann, angeordnet ist.

14. Hochdruckreinigungsgerät nach Anspruch 13,
**dadurch gekennzeichnet, dass** der Bedienhebel (9) bezüglich der Austrittsrichtung (14) zwischen dem Motor (3) und dem Zulaufventil (60) angeordnet ist.

15. Hochdruckreinigungsgerät nach Anspruch 14,
**dadurch gekennzeichnet, dass** das Hochdruckreinigungsgerät (1) eine Getriebe (61) zur Übertragung eines Drehmoments von dem Motor (3) auf die Pumpe (2) umfasst, dass das Getriebe (61) bezüglich der Austrittsrichtung (14) der Reinigungsflüssigkeit zwischen dem Motor (3) und der Pumpe (2) angeordnet ist, dass der Bedienhebel (9) ein dem Handgriff (11) abgewandtes Längsende (62) besitzt, das zur Betätigung des Zulaufventils (60) bezüglich der Austrittsrichtung (14) zwischen dem Getriebe (61) und dem Zulaufventil (60) angeordnet ist.
